Europäisches Patentamt

European Patent Office

Office européen des brevets

(11) Veröffentlichungsnummer: **0 003 785**
**B1**

(12) **EUROPÄISCHE PATENTSCHRIFT**

(45) Veröffentlichungstag der Patentschrift:
14.10.81

(51) Int. Cl.³: **C 09 D 3/72**, C 08 J 7/04 //
B32B27/08

(21) Anmeldenummer: 79100390.8

(22) Anmeldetag: 12.02.79

(54) Überzugsmittel und Verfahren zur Beschichtung von PVC.

(30) Priorität: 22.02.78 DE 2807479

(43) Veröffentlichungstag der Anmeldung:
05.09.79 Patentblatt 79/18

(45) Bekanntmachung des Hinweises auf die Patenterteilung:
14.10.81 Patentblatt 81/41

(84) Benannte Vertragsstaaten:
BE CH DE FR GB IT NL SE

(56) Entgegenhaltungen:
FR-A-1 548 467
FR-B-2 007 314

(73) Patentinhaber: BAYER AG, Zentralbereich Patente, Marken und Lizenzen, D-5090 Leverkusen 1, Bayerwerk (DE)

(72) Erfinder: Wenzel, Wolfgang, Dr.,
Peter-Landwehrstrasse 13, D-5060 Bergisch-Gladbach (DE)
Erfinder: Schröer, Walter, Dr.,
Nicolai-Hartmann-Strasse 29, D-5090 Leverkusen (DE)
Erfinder: Preuss, Manfred, Verdistrasse 31, D-4010 Hilden (DE)
Erfinder: Koch, Hans-Joachim, Dr., Heymannstrasse 48, D-5090 Leverkusen (DE)

## Überzugsmittel und Verfahren zur Beschichtung von PVC

Die vorliegende Erfindung betrifft Beschichtungsmassen auf Basis wäßriger Polyurethan-Dispersionen sowie die Verwendung der Beschichtungsmassen zur Herstellung von Deckstrichen, bzw. Finishen auf PVC. Die erfindungsgemäßen Überzugsmittel enthalten ein Gemisch zweier wäßriger Polyurethan-Dispersionen mit bestimmten chemisch-physikalischen Eigenschaften.

Die Herstellung von Polyurethan-Beschichtungen auf PVC ist im Prinzip bekannt. So werden beispielsweise in den US-Patentschriften 3 262 805, 4 017 493 und 4 045 600 Verfahren zur Beschichtung von PVC unter Verwendung von in organischen Lösungsmitteln gelösten Einkomponenten- bzw. Zweikomponenten-Polyurethansystemen beschrieben. Die Verwendung von lösungsmittelhaltigen Überzugsmitteln ist jedoch in der Praxis mit Nachteilen verbunden; insbesondere ist es aus ökonomischen und ökologischen Gründen erforderlich, die organischen Lösungsmittel nach dem Beschichtungsvorgang rückzugewinnen. Es besteht daher allgemein ein Bedarf nach lösungsmittelfreien Beschichtungsmitteln.

Die FR-A-1 548 467 betrifft ein Verfahren zur Herstellung von wäßrigen, sedimentierenden, aber redispergierbaren Polyurethandispersionen, wobei man bestimmte ionische Polyurethane als Emulgator für ein sonst nicht dispergierbares, Ionengruppen-freies Polyurethan verwendet.

Die FR-P-2 007 314 beschreibt ein Verfahren zur Herstellung mikroporöser Folien nach dem an sich bekannten Koagulationsverfahren, wobei in ein in einem organischen Lösungsmittel gelöstes Polyurethan in einem wäßrigen Koagulationsbad zu einer mikroporösen Struktur ausgefällt wird. Dabei wird zur Erleichterung der Koagulation bzw. zur Reproduzierbarkeitserhöhung des Verfahrens der Polyurethanlösung eine bestimmte Menge an kationische Gruppen aufweisenden Polyurethanen zugesetzt. In beiden französischen Patentschriften wird jedoch kein Verfahren beschrieben, wo zwei wäßrige Polyurethandispersionen gemischt werden.

Aus der DOS 1 769 387 (Britische Patentschrift 1 191 260) ist es bekannt, PVC mit wäßrigen Polyurethan-Dispersionen zu verkleben. Als Deckstrich oder Finish auf PVC konnten sich die wäßrigen Polyurethan-Dispersionen jedoch nicht durchsetzen, da es bisher nicht möglich war, Produkte zur Verfügung zu stellen, welche einerseits gute Haftung an PVC besitzen und andererseits das in der Beschichtungsindustrie für Deckstriche bzw. Finishe geforderte hohe Qualitätsniveau (hoher Erweichungspunkt; große mechanische Festigkeit; Stabilität gegen Hydrolysenalterung; geringe Quellung in Weichmachern; Sperrwirkung gegen die Migration der im PVC enthaltenen Weichmacher; angenehmer, trockener Griff) aufweisen.

Überraschenderweise wurde nun jedoch gefunden, daß man auf Basis wäßriger Polyurethan-Dispersionen Beschichtungskompositionen erhält, welche die genannten Anforderungen erfüllen, wenn man zwei verschiedene Polyurethan-Dispersionen, welche jeweils unterschiedliche chemisch-physikalische Kriterien erfüllen müssen, miteinander abmischt.

Es wäre nämlich eher zu erwarten gewesen, daß sich die negativen Eigenschaften der beiden Komponenten A und B addieren würden, so daß also die Überzüge zum Beispiel geringe Haftung auf PVC und einen schlechten Oberflächengriff haben würden.

Gegenstand der Erfindung sind Überzugsmittel auf Basis wäßriger, emulgatorfreier, sedimentationsstabiler Polyurethan-Dispersionen mit einem Feststoffgehalt unter 60 Gew.-%, welche dadurch gekennzeichnet sind, daß sie, bezogen auf Polyurethanfeststoff,

A) 2—90, vorzugsweise 5—50, Gewichtsprozent eines Polyurethans, das
   a) 5—100, bevorzugt 8—40, Milliäquivalentprozente bzw. Pseudomilliäquivalentprozente an anionischen und/oder kationischen Gruppen und/oder Äthylenoxid-Sequenzen, wobei 0,5 Gew.-% an $-CH_2-CH_2-O-$Einheiten einem »Pseudomilliäquivalentprozent« entsprechen, sowie
   b) 10 bis 65 Gew.-%, bezogen auf Feststoff, an linearen Alkylengruppen mit 4 bis 6 C-Atomen aufweist,
   und welches zu Filmen führt, die
   c) einen Erweichungspunkt unter 205°C, vorzugsweise unter 200°C, besonders bevorzugt von 140 bis 190°C und
   d) eine Shore-A-Härte unter 97, vorzugsweise von 30 bis 95 haben, sowie
B) 10 bis 98 Gew.-%, bevorzugt 50 bis 95 Gew.-% eines Polyurethans, das
   a) 5 bis 30, vorzugsweise 8 bis 20 Milliäquivalentprozente bzw. Pseudomilliäquivalentprozente an anionischen und/oder kationischen Gruppen und/oder Äthylenoxid-Sequenzen aufweist, und zu Filmen führt, die
   b) oberhalb von 210°C, vorzugsweise oberhalb von 215°C schmelzen und
   c) eine Shore-D-Härte von mehr als 50, bevorzugt mehr als 55 haben,

enthalten.

Gegenstand der Erfindung ist auch ein Verfahren zur Direkt- oder Umkehrbeschichtung von homogenem oder verschäumtem PVC mit Polyurethanen, welches dadurch gekennzeichnet ist, daß

# 0 003 785

bei der Beschichtung die erfindungsgemäßen Überzugsmittel eingesetzt werden.

Als Komponenten A und B der erfindungsgemäßen Beschichtungskompositionen kommen beliebige wäßrige, sedimentationsstabile Polyurethan-Dispersionen mit einer Teilchengröße von vorzugsweise 150 bis 400 mµ in Frage, sofern sie jeweils die oben angegebenen Kriterien erfüllen. Die beiden Einzelkomponenten sind nicht Gegenstand der vorliegenden Erfindung. Die Dispersionen weisen im allgemeinen einen Feststoffgehalt von unter 60 Gew.-%, vorzugsweise 20 bis 50 Gew.-%, auf und können nach verschiedenen, an sich bekannten Verfahren hergestellt werden. Selbstverständlich können erfindungsgemäß alle an sich bekannten, handelsüblichen Dispersionen eingesetzt werden, sofern sie die obengenannten Eigenschaften aufweisen.

Verfahren für die Herstellung erfindungsgemäß geeigneter stabiler, wäßriger Polyurethan-Dispersionen werden beispielsweise in den deutschen Auslegeschriften 1 178 586 (US-Patent 3 480 592), 1 495 745 (US-Patent 3 479 310) und 1 770 068 (US-Patent 3 756 992), den deutschen Offenlegungsschriften 2 314 512 (US-Patent 3 905 929), 2 314 513 (US-Patent 3 920 598), 2 320 719 (Britische Patentschrift 1 465 572), 2 446 440 und 2 555 534 sowie von D. Dieterich in »Angewandte Chemie« 82, 53 (1970), beschrieben. Das allgemeine Prinzip dieser Verfahren besteht darin, in die Kette eines Polyurethan- bzw. Polyurethan-Harnstoff-Makromoleküls hydrophile Zentren als sogenannte innere Emulgatoren einzubauen. Als hydrophile Zentren kommen in diesem Zusammenhang anionische und/oder kationische Gruppen und/oder $-CH_2-CH_2-O-$Sequenzen in Betracht. Die hydrophilen Zentren können im Prinzip zu einem beliebigen Zeitpunkt während der Herstellung des Polyurethans in das Makromolekül eingebaut werden.

Im allgemeinen geht man dabei so vor, daß zunächst aus einer höhermolekularen Polyhydroxyl-Verbindung, ggf. einem niedermolekularen Mono-, Di- oder Triol, sowie einem Überschuß an Polyisocyanat ein Präpolymeres mit endständigen NCO-Gruppen hergestellt wird, welches dann unter Kettenverlängerung, beispielsweise analog zu den Verfahren der DAS 1 495 745 (US-Patent 3 479 310), der DOS 1 770 068 (US-Patent 3 756 992) oder der DOS 2 446 440, in eine Polyurethan-Dispersion übergeführt wird. Sowohl die höhermolekulare Polyhydroxylverbindung als auch der ggf. mitverwendete niedermolekulare Alkohol kann dabei ionische Gruppen oder in ionische Gruppen überführbare Gruppierungen enthalten, wie sie beispielsweise in DOS 1 770 068 und DOS 2 446 440 angeführt werden. Es ist aber auch möglich, neben bzw. anstelle der ionisch modifizierten hoch- und niedermolekularen Alkohole als hydrophile Segmente Mono- oder Diole mit Äthylenoxid-Sequenzen in das Makromolekül einzubauen, wie sie z. B. in den deutschen Offenlegungsschriften 2 314 512 (US-Patent 3 905 929), 2 551 094, 2 555 534 und 2 651 506 beschrieben werden. Prinzipiell kann man jedoch auch hydrophobe Präpolymere (also solche ohne hydrophile Zentren) aufbauen und diese dann unter Kettenverlängerung mit beispielsweise Diaminen oder Diolen, welche ionische Gruppen enthalten (DOS 2 035 732) zu in Wasser dispergierbaren Polyurethanen bzw. Polyurethanharnstoffen, umsetzen.

Bei der Herstellung der Komponente A der erfindungsgemäßen Beschichtungsmassen können im Prinzip beliebige höhermolekulare Polyhydroxyl-Verbindungen eingesetzt werden, wobei jedoch darauf zu achten ist, daß insgesamt das Polyurethan-Molekül die angegebene Mindestmenge an linearen Alkylen-Gruppen mit 4—6 Kohlenstoffatomen, enthält. Diese Alkylen-Segmente können sowohl über die Polyol-Komponente (beispielsweise Polyester auf Basis von Adipinsäure und/oder Hexandiol oder Butandiol) als auch über die Isocyanat-Komponente (Hexamethylendiisocyanat) eingebaut werden. Bei der Herstellung der Polyurethan-Dispersion B setzt man vorzugsweise relativ niedrigmolekulare Polyester und/oder Polyäther als Polyolkomponente zum Aufbau des NCO-Vorpolymeren ein (Mol.-Gewicht unter 1000, vorzugsweise unter 700). Diese Polyester bzw. Polyäther enthalten vorzugsweise aromatische Ringe, so daß das fertige Polyurethan insgesamt 3 bis 60, vorzugsweise 10 bis 25 Gewichtsprozent, bezogen auf Feststoff, an aromatischen Gruppen enthält. Dies wird zum Beispiel dadurch erreicht, daß man Polyester auf Basis von Phthalsäure, Isophthalsäure, Terephthalsäure, Naphthalindicarbonsäure oder Diphenylcarbonsäure bzw. Polyäther auf Basis von Bisphenol A oder analogen aromatischen Hydroxylverbindungen einsetzt. Alle diese zum Aufbau der Polyurethan-Dispersionen A und B erforderlichen Ausgangskomponenten werden in den oben zitierten Literaturstellen im Detail beschrieben.

Als Isocyanatkomponente werden beim Aufbau der NCO-Präpolymeren in der Regel die in der Polyurethanchemie üblichen Diisocyanate wie z. B. Hexamethylendiisocyanat, 1-Isocyanato-3,3,5-trimethyl-5-isocyanato-methylcyclohexan (im folgenden »Isophorondiisocyanat« genannt), 4,4'-Diisocyanato-dicyclohexylmethan und seine 4,2'- und 2,2'-Isomeren, 2,4-Diisocyanatotoluol, 2,6-Diisocyanatotoluol und Mischungen daraus, 4,4'-Diisocyanatodiphenylmethan und seine 4,2'- und 2,2'-Isomeren eingesetzt, wobei aliphatische und cycloaliphatische Diisocyanate bevorzugt sind. Neben den Diisocyanaten können ggf. auch Monoisocyanate, wie z. B. Stearylisocyanat, mitverwendet werden.

Während in den Dispersionen vom Typ A, wie schon erwähnt, 5 bis 100, bevorzugt 8 bis 40 (Pseudo-)Milliäquivalente an hydrophilen Gruppen pro 100 g Feststoff enthalten sein sollen, liegt bei den Dispersionen vom Typ B der Gehalt an hydrophilen Gruppen bei 5 bis 30, bevorzugt 8 bis 20 (Pseudo-)Milliäquivalenten pro 100 g Feststoff).

Unter einem »Pseudomilliäquivalent« ist erfindungsgemäß jene Menge an Äthylenoxid-Einheiten im

3

Polyurethan, vorzugsweise in einer zu der Hauptkette des Polyurethanmoleküls seitenständigen Polyätherkette, zu verstehen, die in ihrer hydrophilierenden Eigenschaft einem Milliäquivalent an ionischen Gruppen entspricht. Definitionsgemäß sollen im Zusammenhang mit der vorliegenden Erfindung 0,5 Gew.-% an $-CH_2-CH_2-O-$Einheiten einem »Pseudomilliäquivalentprozent« entsprechen.

Das Molekulargewicht des in Wasser dispergierten Polyurethans ist abhängig von den Aufbaukomponenten und insbesondere vom Herstellungsverfahren. Verfährt man z. B. nach der Lehre der DOS 1 770 068 (US-Patent 3 756 992) und stellt in Wasser dispergierbare Oligourethane her, so liegt das Molekulargewicht unter 20 000, bevorzugt zwischen 1500 und 10 000. Verfährt man dagegen z. B. nach der Lehre der DAS 1 495 745 (US-Patent 3 479 310) oder der DOS 2 446 440, so liegt das Molekulargewicht des Polyurethans in der Regel über 20 000, bevorzugt über 50 000.

Beide Dispersionstypen A und B können sowohl getrennt als auch in Mischung in wäßriger Phase mit Isocyanaten, bevorzugt Diisocyanaten, und zwar besonders bevorzugt mit 1-Isocyanato-3,3,5-trimethyl-5-isocyanatomethylcyclohexan, unter Harnstoffumhüllung modifiziert werden, wobei das Isocyanat in der Weise abreagieren soll, daß ein Aufschäumen infolge zu starker Kohlendioxydentwicklung unterbleibt. Besonders bevorzugt werden auf diese Weise die Dispersionen des Typs B modifiziert.

Man geht dabei so vor, daß man das flüssige oder aufgeschmolzene Isocyanat (vorzugsweise in Abwesenheit von organischen Lösungsmitteln) der vorgelegten wäßrigen Polyurethandispersion bei Temperaturen von 10 bis 80°C, vorzugsweise bei Raumtemperatur, unter Rühren zusetzt. Die Temperatur kann danach vorsichtig erhöht werden, so daß ein Schäumen des Reaktionsgemisches vermieden wird.

Bei dem geschilderten Modifizierungsvorgang werden im allgemeinen 1 bis 50 Gewichtsprozent, bevorzugt weniger als 15 Gewichtsprozent, bezogen auf Polyurethan-Feststoff, an Isocyanat eingesetzt.

Neben den Dispersionen A und B kann man in Anteilen unter 50 Gew.-%, bevorzugt unter 20 Gew.-%, bezogen auf Feststoff, auch andere Polyurethan-Dispersionen oder andere Polymer-Dispersionen (z. B. auf Basis von Styrol-Butadien-Copolymeren, Styrol-Acrylnitril-Copolymeren, Polyacrylsäureestern, Poly-(meth)acrylaten oder PVC, die ggf. auch externe Emulgatoren enthalten), in den erfindungsgemäßen Überzugsmitteln mitverwenden.

Die erfindungsgemäßen Kompositionen enthalten die für ihre Dispergierbarkeit in Wasser notwendigen Emulgatoren in Form eingebauter hydrophiler Gruppen, wie sie oben beschrieben sind. Selbstverständlich ist aber auch ein Zusatz von an sich bekannten externen Emulgatoren möglich; der Anteil an eingebautem Emulgator kann in diesem Fall verringert werden.

Den erfindungsgemäßen Beschichtungsmassen können selbstverständlich auch die aus der Beschichtungstechnik an sich bekannten griffverbessernden Mittel, Pigmente, Verlaufmittel und andere Hilfsmittel zugemischt werden. Gegebenenfalls können sie auch (in Mengen von vorzugsweise weniger als 5 Gewichtsprozent, bezogen auf wäßrige Dispersionskomposition) Lösungsmittel, wie z. B. Alkohole oder Ketone, enthalten.

Die erfindungsgemäßen Überzugsmittel eignen sich insbesondere als Deckstriche bzw. Finishe bei der Beschichtung von Textilien mit PVC. Im folgenden sollen drei verschiedene mögliche Verfahrensweisen zum Aufbringen der erfindungsgemäßen Kompositionen beschrieben werden:

1. Auf eine kompakte PVC-Schicht, die auf ein Trägermaterial, beispielsweise ein Textil, appliziert worden ist, wird (z. B. durch Rakeln, Spritzen oder Drucken) die erfindungsgemäße Dispersionskomposition aufgebracht. Im Ausheizkanal wird im allgemeinen die Beschichtung bei 70 bis 190°C getrocknet. Anschließend wird das so erhaltene Kunstledermaterial gegebenenfalls maschinell geprägt und dann aufgerollt.

2. Die Polyurethan-Dispersions-Komposition wird auf ein Trennpapier oder ein anderes Trägermaterial wie z. B. ein Stahlband aufgerakelt und im Ausheizkanal getrocknet. Auf die getrocknete PUR-Schicht wird eine entgaste oder eine geschäumte PVC-Paste über ein Rakelmesser aufgetragen. In die PVC-Paste wird das zu beschichtende Textil appliziert. In einem Ausheizkanal wird das PVC in an sich bekannter Weise geliert. Nach dem Abkühlen kann das Trennpapier bzw. das andere Trägermaterial abgezogen und das Kunstleder aufgerollt werden.

3. Die erfindungsgemäße Komposition wird auf ein Trennpapier oder ein anderes Trägermaterial wie z. B. ein Stahlband aufgerakelt und im Ausheizkanal getrocknet. Auf die getrocknete PUR-Schicht wird eine kompakte PVC-Paste aufgerakelt, die chemische Treibmittel, wie z. B. Azoisobuttersäuredinitril und Azodicarbonamid enthält (vgl. auch F. Lober, Angew. Chem. 64, 65 (1952); R. Reed, Plastics Progress 1955, 51; H. A. Scheurlen, Kunststoffe 47, 446 (1957)). In die PVC-Paste wird ein Textil einkaschiert und danach in einen Heizkanal gefahren. Während des Geliervorgangs entsteht der gewünschte PVC-Schaum. Nach dem Abkühlen des Materials auf in der Regel unter 80°C wird das Trägermaterial abgezogen und das so erhaltene Kunstleder aufgerollt.

Während das Verfahren 1) eine Direktbeschichtung des PVC-Textil-Verbundes mit einer Polyurethan-Dispersions-Komposition darstellt; sind die Verfahren 2) und 3) sogenannte Umkehrbeschichtungen. Die Dicke des Polyurethan-Deckstrichs liegt in allen Fällen bei ca. 5 bis 100 g/m², vorzugsweise 8 bis 25 g/m².

Beim Gelieren von PVC-Pasten werden in der Regel Temperaturen von ca. 170 – 200°C angewandt. Daher sollte der Schmelzpunkt eines Deckstrichs auf PVC oberhalb von 200°C liegen. PVC ist ein äußerst hydrolysestabiler Kunststoff. Aus diesem Grunde sollte der Finish ebenfalls möglichst hydrolysestabil sein, um nicht eher als das PVC abgebaut zu werden; dabei ist zu berücksichtigen, daß PVC im Laufe der Zeit geringe Mengen an Salzsäure abgibt, die die Hydrolysenbeständigkeit des Deckstrichs negativ beeinflussen. Daneben können auch die im PVC zur Senkung der Geliertemperatur eingesetzten Metallsalze (in der Regel Blei-, Cadmium- oder Zink-Verbindungen) die Hydrolysenbeständigkeit beeinträchtigen.

Ein wesentliches Kriterium eines guten PVC-Deckstrichs ist schließlich noch eine relativ geringe Quellung in den handelsüblichen Weichmachern für PVC. Sie ist stark abhängig von der Art der Weichmacher (im allgemeinen Ester aus Phthalsäure, Adipinsäure, Phosphorsäure oder Alkylsulfonsäure mit α-Äthylhexanol, n-Butanol, Benzylalkohol, Phenol und/oder Kresol). Eine geringe Quellung des Deckstrichmaterials im Weichmacher für PVC ist andererseits vermutlich sogar notwendig, um eine gute Haftung auf Weich-PVC herzustellen. Um aber eine Migration von Weichmacher an die Oberfläche zu verhindern, sollte die Quellung der Finishe möglichst gering sein.

Überraschenderweise werden alle diese Kriterien von den erfindungsgemäßen Beschichtungssystemen in optimaler Weise erfüllt, während bei Verwendung der Einzelkomponenten A oder B allein nur sehr unbefriedigende Ergebnisse erhalten werden.

Eine Prägung der erfindungsgemäß hergestellten fertigen Beschichtung ist selbstverständlich jederzeit möglich. So kann das beschichtete Textil beispielsweise direkt im Anschluß an den Trocken- oder Geliervorgang, ggf. aber auch erst nach kürzerer oder auch längerer Lagerzeit der Beschichtung, geprägt werden. Beim Umkehrverfahren ist durch die Verwendung eines geprägten Trennpapiers oder anderen Trägermaterials eine entsprechende Oberflächenstrukturierung schon während der Beschichtungsherstellung zu erzielen.

Die folgenden Beispiele dienen zur Erläuterung der Erfindung. Wenn nicht anders vermerkt, sind Mengenangaben als Gewichtsteile bzw. Gewichtsprozente zu verstehen.

## Beispiel 1

### 1.1) Dispersion Typ A

Ansatz:  315 g  Hexandioladipat (OH-Zahl 134)
9 g  Butandiol-1,4
105 g  Hexamethylendiisocyanat
950 g  Aceton
23 g  Äthylen-diamino-2-äthansulfonsaures Natrium (45%ig in Wasser; im folgenden »AAS-Lösung« genannt)
660 g  entsalztes Wasser

Der Polyester wird 60 Minuten bei 110°C unter Rühren im Wasserstrahlvakuum entwässert und auf 80°C abgekühlt. Das Butandiol wird im Verlauf von 5 Minuten eingerührt und dann das Hexamethylendiisocyanat zugegeben. Das Reaktionsgemisch wird bei ca. 100°C so lange gerührt, bis ein NCO-Wert von 2,8% erreicht ist. Dann tropft man bei 100°C das Aceton zu. Sobald eine homogene Lösung vorliegt, werden die AAS-Lösung und 60 g Wasser zugegeben und das Gemisch bei 50°C 5 Minuten lang gerührt. Anschließend wird mit dem Rest Wasser dispergiert und das Aceton destillativ entfernt. Man erhält eine sedimentationsstabile Dispersion mit einem Feststoffgehalt von 40,2%, einer Fordbecherviskosität (4 mm Düse) von 25 Sekunden und einem pH-Wert von 6,8.

Ein aus dieser Dispersion hergestellter Film besitzt einen Härtegrad von 90 Shore A und einen Erweichungspunkt von 160°C.

### 1.2) Dispersion Typ B

Ansatz:  570 g  eines auf Bisphenol A gestarteten Polypropylenglykolpolyäthers (OH-Zahl 197)
90 g  eines propoxylierten Adduktes aus 2-Butendiol-1,4 und NaHSO₃ (OH-Zahl 261)
309 g  Hexamethylendiisocyanat
75 g  Harnstoff
2380 g  entsalztes Wasser
170 g  Formaldehyd (30%ig in Wasser)
76 g  Isophorondiisocyanat

Der Polyäther und das Addukt werden bei 110°C unter Rühren im Wasserstrahlvakuum 1 Stunde entwässert und dann auf 70°C abgekühlt. Danach wird das Diisocyanat zugegeben und das Reaktionsgemisch so lange bei 80°C gerührt, bis ein NCO-Gehalt von 5,5% erreicht ist. Dann wird der Harnstoff zugegeben, das Gemisch auf 125°C erwärmt und gerührt. Sobald die Schmelze NCO-frei ist, wird auf 100°C abgekühlt und das Wasser (80°C warm) eingerührt. Nach ca. einstündigem Nachrühren wird der Formaldehyd zugesetzt und das Gemisch noch ca. 1 Stunde bei 70°C gerührt. Nachdem die Dispersion auf Raumtemperatur abgekühlt ist, wird das Isophorondiisocyanat eingerührt. Die Dispersion wird langsam bis auf 90°C erwärmt, wobei darauf zu achten ist, daß die $CO_2$-Entwicklung nicht zu starken Schäumen führt.

Die so erhaltene Dispersion $B_1$ hat einen Feststoffgehalt von 29,4%, eine Fordbecherviskosität (4 mm Düse) von 12,2 Sekunden und einen pH-Wert von 6,2. Die Dispersion zeigt im durchscheinenden Licht einen Tyndall-Effekt. Der Feststoff enthält 17,8 Milliäquivalentprozent an $SO_3^{\ominus}$-Gruppen.

Ein aus der Dispersion $B_1$ hergestellter Film zeigt einen Härte-Grad von etwa 55 Shore D, einen Schmelzpunkt von ca. 230°C und eine Zugfestigkeit nach 6 Wochen Hydrolysealterung bei 70°C und 95% relativer—Luftfeuchtigkeit (sogenannter Tropentest) von 100% der Ausgangsfestigkeit. Die Volumenquellung nach 7 Tagen Lagerzeit bei Raumtemperatur in PVC-Weichmachern auf Basis von Phthalsäureestern beträgt weniger als 10 Vol.-%.

Eine Variation der Dispersion $B_1$ ist die Dispersion $B_2$; sie besteht darin, daß man auf die Nachbehandlung der PUR-Dispersion mit Isophorondiisocyanat in wäßriger Flotte verzichtet. Dann resultiert ein Film mit einer Härte von 54 Shore D, einem Erweichungspunkt von etwa 230°C und einer immer noch sehr günstigen Zugfestigkeit nach 6 Wochen Tropentest von ca. 81% des Ausgangswertes. Die Weichmacherquellung ist nahezu ebenso gering wie bei der mit Diisocyanat nachbehandelten Dispersion $B_1$ (siehe Tabelle).

### 1.3) Herstellung eines Finishs auf PVC

Auf einem normalen Trennpapier (z. B. [R]Stripcote VEM C1S der Firma S. D. Warren) werden die einzelnen Dispersionen A und B bzw. deren Mischung (im Verhältnis A : B = 2 : 8) zusammen mit einem Acrylsäure-Verdicker mittels einer Walzenrakel mit eingeschliffenem Rakelmesser derart aufgetragen, daß nach dem Trocknen bei 80−150°C ein Film von 1,5 g/m² entsteht. Als Finish werden die folgenden Rezepturen eingesetzt:

a) (Vergleich)

| | |
|---|---|
| 100 Gew.-Teile | 40%ige PUR-Dispersion A |
| 1 Gew.-Teil | Polyacrylsäure-Verdicker |
| 5 Gew.-Teile | wäßr. Pigmentpräparation |

mit Ammoniak auf pH 8 eingestellt

b) (Vergleich)

| | |
|---|---|
| 100 Gew.-Teile | 40%ige PUR-Dispersion $B_1$ bzw. $B_2$ |
| 2,5 Gew.-Teile | Polyacrylsäure-Verdicker |
| 5 Gew.-Teile | wäßr. Pigmentpräparation |

mit Ammoniak auf pH 8 eingestellt.

c) (erfindungsgemäß)

| | |
|---|---|
| 20 Gew.-Teile | 40%ige PUR-Dispersion A |
| 80 Gew.-Teile | 40%ige PUR-Dispersion B |
| 2,5 Gew.-Teile | Polyacrylsäure-Verdicker |
| 5 Gew.-Teile | wäßr. Pigmentpräparation |

mit Ammoniak auf pH 8 eingestellt.

Auf die ausgeheizten Finishe wird je eine PVC-Treibschaumbeschichtung folgender Art aufgebracht:

| | |
|---|---|
| 55 Gew.-Teile | eines PVC-Plastisols (z. B. [R]Solvic 336) |
| 9 Gew.-Teile | Weichmacher Dioctylphthalat |
| 36 Gew.-Teile | Weichmacher Didecylphthalat |
| 10 Gew.-Teile | Kreide |
| 1 Gew.-Teil | $SiO_2$-Pulver |

6

1 Gew.-Teil Azoisobuttersäuredinitril
1 Gew.-Teil Cd/Zn-Stearat
5 Gew.-Teile Eisenoxyd-Gelbpigment

Die PVC-Treibpaste wird in einer Auflagemenge von 200 g/m² mit einem Baumwoll-Gewebe kaschiert und bei 190°C innerhalb von 1,5 Minuten ausgeheizt. Anschließend wird abgekühlt und vom Papier getrennt.

Im Falle der Verwendung der Dispersion A allein (Versuch a) resultiert eine Beschichtung mit klebriger Oberfläche, die von einem störenden Anteil an Weichmacher aus der PVC-Paste durchsetzt ist, jedoch eine gute Haftung zum PVC zeigt.

Die Dispersionen $B_1$ und $B_2$ allein als Deckstrich (Versuch b) ergeben im Umkehrverfahren einen sehr trockenen, nicht blockenden, angenehmen Griff mit sehr geringer Weichmacheraufnahme; die Haftung zum PVC ist jedoch schlecht, d. h. die Schichten sind durch leichtes Kratzen mit dem Fingernagel bereits zu trennen.

Beschichtungen mit in jeder Hinsicht befriedigenden Eigenschaften werden jedoch bei Verwendung des Dispersionsgemisches (Versuch c) erhalten.

Aus der nachfolgenden Tabelle werden die Eigenschaften sowie die Haftung des jeweiligen Deckfilms auf dem PVC-Schaum ersichtlich:

| Finish aus | Erweichungspunkt | Dioctylphthalat | Quellung nach 7 Tg. in % Didecylphthalat | Restfestigkeit nach x Wochen Tropentest | Haftung auf PVC | Oberflächengriff im Direktstrich | Oberflächengriff im Umkehrverfahren |
|---|---|---|---|---|---|---|---|
| **Dispersion** | | | | | | | |
| A | 160°C | 19 | 19 | 18%/ 4 Wochen | gut | blockend | klebrig |
| $B_1$ | 230°C | 6 | 6 | 100%/ 6 Wochen | unbefried. | trocken hart | trocken hart |
| $B_2$ | 230°C | 7 | 7 | 81%/ 6 Wochen | unbefried. | trocken hart | trocken hart |
| Mischung (A:$B_1$ = 2:8) | 230°C | 19 | 19 | 83%/ 6 Wochen | gut | trocken flexibel | trocken flexibel |
| (A:$B_2$ = 2:8) | 230°C | 19 | 19 | 73%/ 6 Wochen | gut | trocken flexibel | trocken flexibel |

## Beispiel 2

### 2.1) Dispersion Typ A

Ansatz: 225 g Butandiol-Polyadipat (OH-Zahl 50)
14,4 g eines NaHSO$_3$-Adduktes an propoxyliertes Butendiol (OH-Zahl 258; 80%ig in Toluol)
31,1 g Toluylendiisocyanat (65% 2,4- und 35% 2,6-Isomeres)
405 g entsalztes Wasser
20,9 g AAS-Lösung

Der Polyester und das Addukt werden bei 110°C unter Rühren im Wasserstrahlvakuum entwässert und auf 60°C abgekühlt. Unter Kühlen wird das Diisocyanat zugegeben und das Reaktionsgemisch so lange bei 60°C gerührt, bis ein NCO-Wert von 1,85% erreicht ist. Anschließend wird das 40°C warme Gemisch aus Wasser und AAS-Lösung zugegeben und 2 Stunden unter langsamem Abkühlen auf Raumtemperatur nachgerührt.

Der Feststoffgehalt der sedimentationsstabilen Dispersion beträgt 39,0%, die Fordbecherauslaufzeit (4 mm Düse) 35,7 Sekunden und der pH-Wert 6,5. Der Feststoff enthält 27,4 Milliäquivalentprozent an $SO_3^{(-)}$-Gruppen.

Ein Film aus der Dispersion hat einen Härtegrad von 90 Shore A.

Analog zu Beispiel 1.3 wird die Dispersion A (allein bzw. im Gemisch mit Dispersion $B_1$ aus Beispiel 1.2) als Finish verwendet. Es zeigt sich wiederum der Vorteil der Abmischung von A mit B, während Dispersion A alleine zu einer klebrigen Beschichtung führt.

| Finish aus | Erweichungspunkt | Haftung auf PVC | Oberflächengriff im Direktstrich | Umkehr-verfahren |
|---|---|---|---|---|
| Dispersion A | 160°C | gut | blockend | klebrig |
| Mischung (A : B₁ = 2 : 8) | 230°C | gut | trocken elastisch | trocken elastisch |

## Beispiel 3

### 3.1 Dispersion Typ A

Ansatz:   500 g  Neopentylglykol-Hexandiol-Polyadipat (OH-Zahl 66)
          83 g  Hexamethylendiisocyanat
          32 g  AAS-Lösung
        900 g  entsalztes Wasser
      1200 g  Aceton

Der Polyester wird 30 Minuten im Wasserstrahlvakuum bei 110°C unter Rühren entwässert. Er wird auf 80°C abgekühlt und das Diisocyanat zugegeben. Man läßt nun so lange bei 100°C reagieren, bis ein NCO-Wert von 2,85% erreicht ist. Dann wird das Aceton zugegeben. Sobald eine homogene Lösung vorliegt, wird das NCO-Präpolymer mit der AAS-Lösung vermischt. 5 Minuten nach der Aminzugabe wird das Polyurethan mit dem Wasser zu einer Dispersion gefällt. Anschließend wird das Aceton abdestilliert, bis der Acetongehalt unter 1% liegt.

Der Feststoffgehalt der Dispersion beträgt 40,1%, die Fordbecherauslaufzeit (4 mm Düse) 24 Sekunden und der pH-Wert 6,6. Die Dispersion zeigt im durchscheinenden Licht einen Tyndall-Effekt.

Ein aus der Dispersion A hergestellter Film besitzt einen Shore A-Härtegrad von 60 und einen Erweichungspunkt von 180°C. Weitere Filmwerte siehe Tabelle. Der Oberflächengriff ist gummiartig und blockend.

Auf einem ausgelierten und mit einem textilen Substrat verbundenen PVC-Schaum, der nach der Rezeptur von Beispiel 1.3 hergestellt wurde, wird die jeweilige gemäß Beispiel 1.3 verdickte Dispersion (A allein bzw. im Gemisch mit B₁ aus Beispiel 1.2) mittels Walzenrakel in einer Feststoffauflage von 15 g/m² aufgetragen und nach Beispiel 1.3 ausgeheizt.

In der Tabelle sind die Filmeigenschaften der einzelnen Finishe sowie die Beurteilung des Oberflächengriffs und der Haftung auf PVC zusammengestellt:

| Finish aus | Erweichungs-punkt | Quellung in Di-octylphthalat nach 7 Tg. Lagerung (Vol-%) | Restfestigkeit nach x Wochen Tropentest | Oberflächengriff im Direktstreich-verfahren | Haftung auf PVC |
|---|---|---|---|---|---|
| Dispersion A | 180°C | 19 | 0/2 Wochen | blockend | gut |
| Mischung (A : B₁ = 1 : 9) | 230°C | 6 | 80%/6 Wochen | trocken weniger hart | befried. |
| Mischung (A : B₁ = 2 : 8) | 230°C | 13 | 54%/6 Wochen | trocken elastisch | gut |

Dispersion A könnte trotz der guten Haftung auf PVC nicht im Umkehrverfahren mit PVC appliziert werden, da der Film die Geliertemperaturen des PVC-Plastisols nicht aushalten würde. Die Mischung aus A und B erfüllt alle Forderungen.

## Beispiel 4

### 4.1) Dispersion Typ A

Ansatz: 1000 g  Butandiol-polyadipat (OH-Zahl 50)
       380 g  eines auf Bisphenol-A gestarteten Polypropylenglykol-Polyäthers (OH-Zahl 197)

76 g   Dispergator A
417,9 g Hexamethylendiisocyanat
159,4 g Isophorondiamin (IPDA)
33,4 g AAS-Lösung
2190 g  Aceton
3125 g  entsalztes Wasser

Zur Herstellung von Dispergator A wird an das Umsetzungsprodukt eines auf Butanol gestarteten Polyäthylenoxidpolyäthers, der ca. 17% Polypropylenoxidgruppen enthält, mit Hexamethylendiisocyanat (NCO/OH = 2) N,N-Diäthanolamin addiert (NCO/NH = 1). Das Molekulargewicht von Dispergator A beträgt 2250. Der Äthylenoxidanteil beträgt ca. 77 Gewichtsprozent.

Ein Gemisch aus Polyester, Polyäther und Dispergator A wird bei 110°C unter Rühren im Wasserstrahlvakuum 1 Stunde lang entwässert und dann auf 70°C abgekühlt. Danach wird das Diisocyanat zugegeben und das Reaktionsgemisch so lange bei 100°C gerührt, bis ein NCO-Gehalt von 6,0% erreicht ist. Dann wird das Aceton eingerührt. Sobald die Lösung homogen ist, wird das NCO-Präpolymer mit der AAS-Lösung und dem IPDA verlängert. 5 Minuten nach der Aminzugabe wird das Polyurethan mit dem Wasser zu einer Dispersion gefällt. Anschließend wird das Aceton abdestilliert, bis der Acetongehalt unter 1% liegt.

Der Feststoffgehalt der sedimentationsstabilen Dispersion beträgt 41,1%, die Fordbecherauslaufzeit (4 mm Düse) 22,3 Sekunden und der pH-Wert 6,5.

Der Erweichungspunkt eines Films aus der Dispersion A liegt bei 185°C; der Härtegrad bei 81 Shore A.

### 4.2) Dispersion Typ B

Ansatz: 200 g   Äthylenglykol-Phthalsäure-Polyester (OH-Zahl 56)
58 g   Phthalsäure/Adipinsäure-Äthylenglykol-Polyester (OH-Zahl 64)
43 g   Hexamethylendiisocyanat
22 g   AAS-Lösung
470 g   entsalztes Wasser
600 g   Aceton
16 g   Isophorondiisocyanat (IPDI)

Ein Gemisch der Polyester wird bei 110°C im Wasserstrahlvakuum unter Rühren 30 Minuten lang entwässert und auf 70°C abgekühlt. Danach wird das Diisocyanat zugegeben und die Schmelze so lange bei 90°C gerührt, bis ein NCO-Gehalt von 3,4% erreicht ist. Unter Abkühlen auf 50°C wird die Schmelze mit Aceton verdünnt. Sobald eine homogene Lösung vorliegt, wird das NCO-Präpolymer mit der AAS-Lösung verlängert. 5 Minuten nach der Aminzugabe wird das Polyurethan mit Wasser zu einer Dispersion gefällt. Anschließend wird das Aceton abdestilliert, bis der Acetongehalt unter 1 Gewichtsprozent liegt. Bei Raumtemperatur wird dann das IPDI zugegeben. Die Dispersion wird langsam bis auf 90°C erwärmt, wobei darauf zu achten ist, daß die $CO_2$-Entwicklung nicht zu starkem Schäumen führt. Nach 4 Stunden ist die Dispersion NCO-frei. Die zentrifugenstabile (15 Min. bei 3500 U/Min.) Dispersion mit einem Feststoffgehalt von 41,1% hat eine Fordbecherauslaufzeit (4 mm Düse) von 18,3 Sekunden. Der pH-Wert beträgt 6.

Ein aus dieser Dispersion hergestellter Film zeigt einen Härtegrad von etwa 52 Shore D, einen Erweichungspunkt von 215°C und eine schlechte Haftung auf PVC-Schaum.

### 4.3) Beschichtung von PVC

Analog zu Beispiel 1.3 werden die Dispersionen A und B bzw. deren Gemisch im Gewichtsverhältnis 2 : 8 in Finishen zur Beschichtung von PVC eingesetzt.

Die Tabelle zeigt die unterschiedlichen Erweichungspunkte, Filmfestigkeiten nach Alterung und die Haftung auf PVC der Finishe.

| Finish aus | Erweichungs-punkt | Restfestigkeit nach x Wochen Tropentest | Haftung auf PVC | Oberflächengriff im Direktstrich | Umkehr-verfahren |
|---|---|---|---|---|---|
| Dispersion A | 185°C | 34%/6 Wochen | gut | trocken elastisch | klebrig elastisch |
| Dispersion B | 215°C | 93%/6 Wochen | unbefr. | trocken hart | trocken hart |
| Mischung (A:B = 2:8) | 215°C | 80%/6 Wochen | gut | trocken elastisch | trocken elastisch |

Dispersion A ist trotz relativ hohen Erweichungspunktes und guter Haftung auf PVC schlecht hydrolysebeständig; Dispersion B haftet nicht auf PVC.

Die Mischung auf den beiden Dispersionen erfüllt jedoch alle geforderten Bedingungen, wie hohen Erweichungspunkt, hohe Hydrolysenfestigkeit, gute Haftung auf PVC und trockenen, elastischen Griff.

**Patentansprüche**

1. Überzugsmittel auf Basis wäßriger, emulgatorfreier, sedimentationsstabiler Polyurethandispersionen mit einem Feststoffgehalt unter 60 Gew.-%, dadurch gekennzeichnet, daß sie, bezogen auf Polyurethanfeststoff,

A) 2 bis 90 Gew.-% eines Polyurethans, das
   a) 5 bis 100 Milliäquivalentprozente bzw. Pseudomilliäquivalentprozente an anionischen und/oder kationischen Gruppen und/oder Äthylenoxid-Sequenzen, wobei 0,5 Gew.-% an $-CH_2-CH_2-O-$Einheiten einem »Pseudomilliäquivalentprozent« entsprechen, sowie
   b) 10 bis 65 Gew.-%, bezogen auf Feststoff, an linearen Alkylengruppen mit 4 bis 6 C-Atomen aufweist
   und welches zu Filmen führt, die
   c) einen Erweichungspunkt unter 205°C und
   d) eine Shore-A-Härte unter 97 haben, sowie
B) 10 bis 98 Gew.-% eines Polyurethans, das
   a) 5 bis 30 Milliäquivalentprozente bzw. Pseudomilliäquivalentprozente an anionischen und/oder kationischen Gruppen und/oder Äthylenoxid-Sequenzen sowie
   b) 3 bis 60 Gew.-%, bezogen auf Feststoff, aromatischen Ringen aufweist
   und welches zu Filmen führt, die
   c) oberhalb von 210°C schmelzen und
   d) eine Shore-D-Härte von mehr als 50 haben,

enthalten.

2. Überzugsmittel gemäß Anspruch 1, dadurch gekennzeichnet, daß sie, bezogen auf Polyurethanfeststoff,

A) 5 bis 50 Gew.-% eines Polyurethans, das
   a) 8 bis 40 Milliäquivalentprozente bzw. »Pseudomilliäquivalentprozente« an anionischen und/oder kationischen Gruppen und/oder Äthylenoxid-Sequenzen sowie
   b) 10 bis 65 Gew.-%, bezogen auf Feststoff, an linearen Alkylengruppen mit 4 bis 6 C-Atomen aufweist,
   und welches zu Filmen führt, die
   c) einen Erweichungspunkt unter 200°C und
   d) eine Shore-A-Härte zwischen 30 und 95 haben, sowie
B) 50 bis 95 Gew.-% eines Polyurethans, das
   a) 8 bis 20 Milliäquivalentprozente bzw. Pseudomilliäquivalentprozente an anionischen und/oder kationischen Gruppen und/oder Äthylenoxid-Sequenzen sowie
   b) 3 bis 60 Gew.-%, bezogen auf Feststoff, an aromatischen Ringen aufweist
   und zu Filmen führt, die
   c) oberhalb von 215°C schmelzen und
   d) eine Shore-D-Härte von mehr als 55 haben,

enthalten.

3. Überzugsmittel gemäß Anspruch 1 oder 2, dadurch gekennzeichnet, daß Komponente B ein Polyurethan auf Basis von Polyestern und/oder Polyäthern mit einem Molekulargewicht unter 1000 ist, welche aromatische Ringe enthalten.

4. Überzugsmittel gemäß Anspruch 1 bis 3, dadurch gekennzeichnet, daß Komponente B eine wäßrige Polyurethandispersion ist, welche mit 1 bis 50 Gew.-%, bezogen auf Feststoff der Komponente B, an Isocyanaten modifiziert worden ist.

5. Verfahren zur Direkt- oder Umkehrbeschichtung von homogenem oder verschäumtem PVC mit Polyurethanen, dadurch gekennzeichnet, daß bei der Beschichtung Überzugsmittel gemäß Anspruch 1 bis 4 eingesetzt werden.

## Claims

1. Coating compositions based on aqueous, emulsifier-free, sedimentation-resistant polyurethane dispersions having a solid content below 60% by weight, characterised in that they contain, based on the polyurethane solid content

A) 2 to 90% by weight of a polyurethane which contains
   a) 5 to 100 milliequivalent percent or pseudo milliequivalent percent of anionic and/or cationic groups and/or ethylene oxide sequences, 0.5% by weight of $-CH_2-CH_2-O-$units corresponding to one »pseudo milliequivalent percent«, and
   b) 10 to 65% by weight, based on the solid content, of linear alkylene groups having 4 to 6 C atoms
   and which polyurethane forms films which
   c) have a softening point below 205°C and
   d) have a Shore A hardness below 97, and
B) 10 to 98% by weight of a polyurethane which contains
   a) 5 to 30 milliequivalent percent or pseudo milliequivalent percent of anionic and/or cationic groups and/or ethylene oxide sequences and
   b) 3 to 60% by weight, based on the solid content, of aromatic rings
   and which polyurethane forms films which
   c) melt above 210°C and
   d) have a Shore D hardness above 50.

2. Coating compositions according to Claim 1, characterised in that they contain, based on the polyurethane solid content

A) 5 to 50% by weight of a polyurethane which contains
   a) 8 to 40 milliequivalent percent or »pseudo milliequivalent percent« of anionic and/or cationic groups and/or ethylene oxide sequences and
   b) 10 to 65% by weight, based on the solid content, of linear alkylene groups having 4 to 6 C atoms,
   and which polyurethane forms films which
   c) have a softening point below 200°C and
   d) have a Shore A hardness between 30 and 95, and
B) 50 to 95% by weight of a polyurethane which contains
   a) 8 to 20 milliequivalent percent or pseudo milliequivalent percent of anionic and/or cationic groups and/or ethylene oxide sequences and
   b) 3 to 60% by weight, based on the solid content, of aromatic rings
   and which polyurethane forms films which
   c) melt above 215°C and
   d) have a Shore D hardness above 55.

3. Coating compositions according to Claim 1 or 2, characterised in that component B is a polyurethane based on polyesters and/or polyethers having a molecular weight below 1000 which contain aromatic rings.

4. Coating compositions according to Claims 1 to 3, characterised in that component B is an aqueous polyurethane dispersion which has been modified with 1 to 50% by weight, based on the solid content of component B, of isocyanates.

5. Process for the direct coating or reversal coating of homogeneous or foamed PVC with polyurethanes, characterised in that coating compositions according to Claim 1 to 4 are used for coating.

**Revendications**

1. Agents de revêtement à base de dispersions aqueuses de polyuréthannes stables à la sédimentation, exemptes d'émulsifiant, ayant une teneur en solides de moins de 60% en poids, caractérisés en ce qu'ils contiennent, par rapport à la matière solide du polyuréthanne,

A) 2 – 90% en poids d'un polyuréthanne qui présente
    a) 5 – 100 milliéquivalents % ou pseudomilliéquivalents % de groupes anioniques et/ou cationiques et/ou de séquences oxydes d'éthylène, où 0,5% en poids de motifs $-CH_2-CH_2-O-$ correspondent à un pseudomilliéquivalent %, ainsi que
    b) 10 à 65% en poids, par rapport au solide, de groupes alkylènes linéaires en $C_4-C_6$, et qui conduit à des pellicules qui ont
    c) un point de ramollissement inférieur à 205°C, et
    d) une dureté Shore A inférieure à 97, ainsi que
B) 10 à 98% en poids d'un polyuréthanne qui présente
    a) 5 à 30 milliéquivalents % ou pseudomilliéquivalents % de groupes anioniques et/ou cationiques et/ou de séquences oxyde d'éthylène, ainsi que
    b) 3 à 60% en poids de noyaux aromatiques, par rapport au solide et qui conduit à des pellicules qui
    c) fondent au-dessus de 210°C, et
    d) ont une dureté Shore D de plus de 50.

2. Agents de revêtement selon la revendication 1, caractérisés en ce qu'ils contiennent, par rapport à la matière solide du polyuréthanne,

A) 5 à 50% en poids d'un polyuréthanne qui présente
    a) 8 à 40 milliéquivalents % ou pseudomilliéquivalents % de groupes aniontiques et/ou cationiques et/ou de séquences oxydes d'éthylène, ainsi que
    b) 10 à 65% en poids, par rapport au solide, de groupes alkylènes linéaires en $C_4-C_6$, et qui conduit à des pellicules qui ont
    c) un point de ramollissement inférieur à 200°C, et
    d) une dureté Shore A de 30 à 95, ainsi que,
B) 50 à 95% en poids d'un polyuréthanne qui présente
    a) 8 à 20 milliéquivalents % ou pseudomilliéquivalents % de groupes anioniques et/ou cationiques et/ou de séquences oxydes d'éthylène, ainsi que
    b) 3 à 60% en poids de noyaux aromatiques, par rapport au solide et qui conduit à des pellicules qui
    c) fondent au-dessus de 215°C, et
    d) ont une dureté Shore D de plus de 55.

3. Agent de revêtement selon la revendication 1 ou 2, caractérisé en ce que le composant B est un polyuréthanne à base de polyesters et/ou de polyéthers ayant un poids k moléculaire de moins de 1000, qui contiennent des noyaux aromatiques.

4. Agent de revêtement selon les revendications 1 à 3, caractérisé en ce que le composant B est une dispersion aqueuse de polyuréthanne qui a été modifiée avec 1 à 50% en poids d'isocyanates par rapport au solide du composant B.

5. Procédé pour l'enduction directe ou par inversion de PVC homogène ou expansé avec des polyuréthannes, caractérisé en ce que l'on utilise dans l'enduction des agents de revêtement selon les revendications 1 à 4.